# EUROPEAN PATENT APPLICATION

(11) **EP 4 741 892 A1**
(43) Date of publication of application: **13.05.2026**
(21) Application number: 24835361.7
(22) Date of filing: 03.07.2024
(51) Int. Cl.: G02B 6/00

(54) **LIGHT GUIDE DEVICE, OPTICAL MODULE, AND DISPLAY APPARATUS**

(30) Priority: 06.07.2023 CN 202310828697; 16.04.2024 CN 202410459084
(71) Applicant: Goertek Optical Technology (Shanghai) Co., Ltd., Shanghai 201109 (CN)
(72) Inventor: CHENG, Xin, Shanghai 201109 (CN)
(74) Representative: Rau, Schneck & Hübner Patentanwälte Rechtsanwälte PartGmbB
(86) International application number: PCT/CN2024/103268
(87) International publication number: WO 2025/007881

(57) **Abstract**

Embodiments of this application provide a light guide device, an optical module, and a display apparatus. The light guide device includes a substrate and a first grating region, a second grating region, and a third grating region disposed on the substrate. The first grating region is configured to couple light into the substrate and generate a first diffracted light that propagates toward the second grating region; the second grating region receives the first diffracted light and is able to generate a second diffracted light that propagates toward the third grating region; the third grating region receives the second diffracted light and is able to generate a third diffracted light that diffracts toward the second grating region; the second diffracted light and the third diffracted light undergo pupil expansion by the second grating region along two different dimensions and are coupled out.

## Description

This application claims priority to Chinese patent application No. 202310828697.0 filed with CNIPA on April 16, 2024, and entitled "light guide device, optical module and display apparatus", which is hereby incorporated by reference in its entirety.

### TECHNICAL FIELD

The embodiments of this application relate to the field of optical technology, and particularly to a light guide device, optical module, and display apparatus.

### BACKGROUND

Display apparatus, such as head-mounted displays, are now widely used in the technology field, including augmented reality (AR) display apparatus. In the above display apparatus, a light guide device plays a crucial role, guiding light from the light source to the user's eyes.

At present, the mainstream pupil expansion technical solution in diffraction waveguide solutions is the two-dimensional grating pupil expansion solution. Although the two-dimensional grating solution offers a compact layout, its complex optical structure design leads to high costs. Therefore, it has become a key research focus in this field to develop a light guide device that combines a compact layout and a simple design.

### SUMMARY

The object of this application is to provide new technical solutions for a light guide device, an optical module, and a display apparatus.

In a first aspect, embodiments of this application provide a light guide device. The light guide device includes a substrate and a first grating region, a second grating region, and a third grating region disposed on the substrate;

The first grating region is configured to couple light into the substrate and generate a first diffracted light that propagates toward the second grating region;

the second grating region receives the first diffracted light and is able to generate a second diffracted light that propagates toward the third grating region; the third grating region receives the second diffracted light and is able to generate a third diffracted light that diffracts toward the second grating region; the second diffracted light and the third diffracted light undergo pupil expansion by the second grating region along two different dimensions and are coupled out.

Optionally, a set angle θ2 is formed between the grating vector K1 direction of the first grating region and the grating vector K3 direction of the third grating region, and 30°≤θ2≤150°.

Optionally, the first grating region, the second grating region, and the third grating region form a closed grating vector polygon, so that the exit angle of the light rays after being coupled out through the second grating region is consistent with the initial incident angle.

Optionally, a one-dimensional grating is provided in the second grating region.

Optionally, a one-dimensional grating or a two-dimensional grating is provided in the first grating region.

Optionally, a one-dimensional grating is provided in the third grating region.

Optionally, the light guide device is a diffraction optical waveguide lens;
The first grating region, the second grating region, and the third grating region are located on one surface of the substrate along its own thickness direction; or,
the first grating region, the second grating region, and the third grating region are respectively disposed on two opposing surfaces of the substrate along its own thickness direction.

Optionally, the grating types of the first grating region, the second grating region, and the third grating region include volume holographic gratings, surface relief gratings, or photonic crystals.

In a second aspect, embodiments of this application provide an optical module. The optical module includes
the light guide device according to the first aspect; and
a light engine configured for projecting light onto the light guide device such that light projected by the light engine can cover the first grating region.
In a third aspect, embodiments of this application provide a display apparatus. The display apparatus includes:
a housing; and
the optical module according to the second aspect, wherein the optical module is disposed in the housing.

The beneficial effects of this application are as follows:

According to embodiments of this application, a light guide device is provided, which can be applied in augmented reality display apparatus. The design achieves effective in-coupling, directional propagation, pupil expansion and out-coupling of light through the coordinated operation of three grating regions. Compared with traditional light guide devices, the light guide device provided in this application has the characteristics of compact grating structure design and can make full use of the energy of light, thereby improving the propagation efficiency and utilization rate of incident light.

Other features and advantages of the embodiments of the specification will become apparent from the following detailed description of exemplary embodiments of the specification with reference to the drawings.

### BRIEF DESCRIPTION OF THE DRAWINGS

The drawings, which are incorporated in and constitute a part of the specification, illustrate embodiments of the specification and, together with the description, serve to explain the principles of the specification.
FIG. 1 is a structural schematic diagram of the light guide device provided in embodiments of this application;
FIG. 2 is a closed grating vector diagram of the light guide device provided in embodiments of this application;
FIG. 3 is an optical path diagram of the light guide device provided in embodiments of this application.

### Description of the reference numerals:

1. First grating region; 2. Second grating region; 3. Third grating region; 4. Substrate; 01. First diffracted light; 02. Second diffracted light; 03. Third diffracted light; 04. Coupled-out light.

### DETAILED DESCRIPTION

Various exemplary embodiments of the application will now be described in detail with reference to the drawings. It should be noted that the relative arrangement of components and steps, the numerical expressions and numerical values set forth in these embodiments do not limit the scope of the present application unless specifically stated otherwise.

The following description of at least one exemplary embodiment is merely illustrative in nature and is in no way intended to limit the invention, its application, or uses.

Technologies and devices known to those skilled in the relevant art may not be discussed in detail, but where appropriate, such technologies and devices should be considered part of the specification.

In all examples shown and discussed herein, any specific values should be interpreted as merely exemplary and not limiting. Therefore, other examples of the exemplary embodiments may have different values.

It should be noted that like reference numerals and letters refer to like items in the following figures, and therefore, once an item is defined in one figure, it need not be further discussed in subsequent figures.

The light guide device, optical module, and display apparatus provided in the embodiments of this application will be described in detail below with reference to the accompanying drawings.

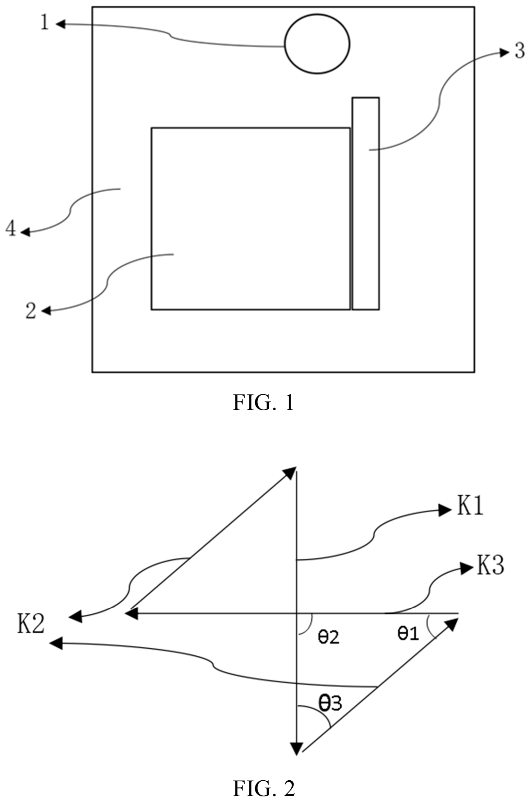

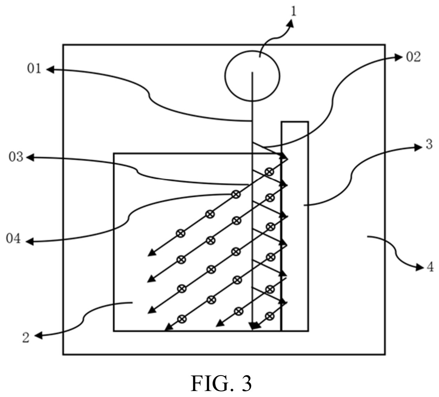

According to an embodiment of the application, a light guide device is provided. Referring to FIG. 1 and FIG. 3, the light guide device includes a substrate 4 and a first grating region 1, a second grating region 2, and a third grating region 3 disposed on the substrate 4; The first grating region 1 is configured to couple light into the substrate 4 and generate a first diffracted light 01 that propagates toward the second grating region 2; the second grating region 2 receives the first diffracted light 01 and is able to generate a second diffracted light 02 that propagates toward the third grating region 3; the third grating region 3 receives the second diffracted light 02 and is able to generate a third diffracted light 03 that diffracts toward the second grating region 2;
the second diffracted light 02 and the third diffracted light 03 undergo pupil expansion by the second grating region 2 along two different dimensions and are coupled out.

According to the light guide device provided in the embodiments of this application, referring to FIG. 3, the second diffracted light 02 and the third diffracted light 03 can undergo pupil expansion within the second grating region 2 along two different dimensions, thereby achieving a two-dimensional pupil expansion effect. The coupled-out light 04, which is coupled out through the second grating region 2, can cover the entire second grating region 2.

The light guide device provided according to the embodiments of this application, referring to FIG. 1, includes a substrate 4, which is, for example, a transparent substrate. At least three grating regions with different functions are provided on the substrate 4, namely a first grating region 1, a second grating region 2 and a third grating region 3. These three grating regions each perform different functions and work together to achieve in-coupling, directional propagation, pupil expansion and out-coupling of the light.

The main function of the first grating region 1 is to receive incident light projected from the outside and couple the incident light into the interior of the substrate 4 through the diffraction effect of the grating. Once the incident light is coupled into the interior of the substrate 4, it will be converted into a first diffracted light 01 and propagate toward the second grating region 2. This ensures that the incident light projected from the outside can effectively enter the interior of the substrate 4 of the light guide device and continue to propagate.

The second grating region 2 is configured to receive the first diffracted light 01 from the first grating region 1. After being diffracted again by the second grating region 2, the first diffracted light 01 is transformed into the second diffracted light 02, and still maintains its original propagation direction, that is, continues to propagate towards the third grating region 3. During this light propagation process, the light is directionally transmitted within the substrate 4.

After receiving the second diffracted light 02, the third grating region 3 generates a third diffracted light 03 through its specific grating structure. Instead of continuing forward, this light turns toward the second grating region 2. In this way, the pupil expansion of light is achieved in two different dimensions within the same region. It should be noted that the light after pupil expansion can be effectively utilized and transmitted throughout the entire second grating region 2, further improving the optical performance and light efficiency of the light guide device.

The light guide device provided in embodiments of this application is designed to achieve effective in-coupling, directional propagation, pupil expansion and out-coupling of light through the coordinated operation of three grating regions. Compared with traditional light guide devices, it has the characteristics of compact grating structure design and can make full use of the energy of light, thereby improving the propagation efficiency and utilization rate of incident light.

In some examples of this application, a set angle θ2 is formed between the grating vector K1 direction of the first grating region 1 and the grating vector K3 direction of the third grating region 3, and 30°≤θ2≤150°.

The first grating region 1 is configured to couple incident light into the interior of the substrate 4 and make the light propagate by total internal reflection inside the substrate 4. That is, the first grating region 1 is the in-coupling region of the light guide device. The second grating region 2 forms a pupil expansion and out-coupling region. The third grating region 3 is an auxiliary pupil expansion region, mainly used to assist the second grating region 2 in achieving the pupil expansion effect of light. Finally, the light rays after pupil expansion are re-diffracted and return to the second grating region 2 to form the coupled-out light 04 and are coupled out.

According to this example, the grating vector direction relationship between the first grating region 1 and the third grating region 3 of the light guide device is described.

The set angle θ2 is the angle between the grating vector K1 direction of the first grating region 1 and the grating vector K3 direction of the third grating region 3, and the set angle θ2 ranges from 30° to 150°. This means that the directions of K1 and K3 are not completely parallel or perpendicular, but rather at a certain inclination angle. This design offers the following advantages:
(1) By optimizing the range of the set angle 02, the propagation path of light and the degree of pupil expansion can be further controlled. This provides designers with greater flexibility to adjust and optimize the optical performance of the light guide device according to specific application requirements.
(2) In optical imaging apparatuses such as head-mounted displays, the performance of light guide devices directly affects the brightness and uniformity of the image. By properly setting the set angle θ2, the distribution and transmission of light can be optimized, thereby improving the display quality of the image and providing users with a better visual experience.

In summary, the light guide device design achieves effective light diffusion and improves display quality by setting the angle range between the grating vector directions of the first grating region 1 and the third grating region 3. This design improves the performance of the light guide device.

Furthermore, an angle θ3 is formed between the grating vector K1 of the first grating region 1 and the grating vector K2 of the second grating region 2. The angle θ3 can be designed to be, for example, 50° to 70°, which is not limited in this application.

According to the light guide device provided in the embodiments of this application, the grating period of the first grating region 1 is D1, the grating period of the second grating region 2 is D2, and the grating period of the third grating region 3 is D3. The relationship between the grating periods of the above three grating regions is shown in FIG. 2 and can be obtained through the sine theorem: sinθ1/D1=sinθ2/D2=sinθ3/D3; where the included angle θ1 is the included angle between the grating vector K2 of the second grating region 2 and the grating vector K3 of the third grating region 3.

The above describes the relationship between the grating periods of the first grating region 1, the second grating region 2, and the third grating region 3 of the light guide device. These grating periods affect the propagation of light and the pupil expansion effect.

The grating period D1 of the first grating region 1 can be set, for example, to 200nm to 600nm. Selecting D1 within this range ensures that the first grating region 1 couples externally projected light into the substrate 4 and generates a first diffracted light 01 that propagates toward the second grating region 2.

For the grating period D2 of the second grating region 2, it satisfies: sinθ1/D1=sinθ2/D2= sinθ3/D3. Referring to FIG. 2, the included angle θ2 is the angle between the grating vector K3 of the third grating region 3 and the grating vector K1 of the first grating region 1. By adjusting the included angle θ2, the diffraction effect of the second grating region 2 on the first diffracted light 01 can be precisely controlled, thereby ensuring that the light can propagate in a predetermined direction and generate the second diffracted light 02.

For the grating period D3 of the third grating region 3, it satisfies: sinθ1/D1=sinθ2/D2= sinθ3/D3. Please continue to refer to FIG. 2. The included angle θ3 is the angle between the grating vector K2 of the second grating region 2 and the grating vector K1 of the first grating region 1. This relationship ensures that the third grating region 3 can successfully receive the second diffracted light 02 and generate the third diffracted light 03 diffracted towards the second grating region 2. By precisely controlling D3, the diffraction behavior of the third diffracted light 03 can be optimized, ultimately enabling two-dimensional pupil expansion of the light in the second grating region 2.

In some examples of this application, the first grating region 1, the second grating region 2, and the third grating region 3 form a closed grating vector polygon, so that the exit angle of the light rays after being coupled out through the second grating region 2 is consistent with the initial incident angle.

Referring to FIG. 2, the grating vectors of the first grating region 1, the second grating region 2, and the third grating region 3 of the light guide device form a closed polygonal structure. This means that the grating vector directions (i.e., K1, K2, and K3) of the three grating regions are related to each other, and they form a closed pattern in a predetermined manner. This closed structure helps light to propagate and diffract in a specific way between the grating regions, reducing light loss and scattering, thereby improving light utilization. Secondly, this design ensures that the exit angle of the light when it is coupled out through the second grating region 2 is consistent with the initial incident angle. This is critical because maintaining the consistency of the incident and exit angles ensures that the direction of light propagation will not change unexpectedly when passing through the light guide device. This guarantees that the out-coupled light will not be distorted, and the resulting image will not be deformed, thus improving the user's visual experience.

In some examples of this application, a one-dimensional grating is provided in the second grating region 2.

For example, only a single one-dimensional grating can be provided in the second grating region 2, which can simplify the design of the grating of the second grating region 2. When a one-dimensional grating is adopted in the second grating region 2, it cooperates with the third grating region 3 located on one side of it to achieve the effect of two-dimensional pupil expansion and out-coupling in the one-dimensional grating region by means of the third grating region 3.

In other words, the light guide device provided in the embodiments of this application can achieve a two-dimensional pupil expansion effect using a one-dimensional grating. The overall grating layout is more compact, and the design of the grating is also simpler, which can reduce the processing difficulty and production cost of the light guide device.

In some examples of this application, the first grating region 1 includes a one-dimensional grating or a two-dimensional grating.

In other words, the first grating region 1 can be composed of a single one-dimensional grating or a single two-dimensional grating, or multiple one-dimensional gratings or multiple two-dimensional gratings. The first grating region 1 is the in-coupling region of the light guide device, and the grating type of the first grating region 1 can be designed according to the requirements of in-coupling efficiency.

In some examples of this application, a one-dimensional grating is provided in the third grating region 3.

Both the third grating region 3 and the second grating region 2 can be provided with one-dimensional gratings. When both use one-dimensional gratings, two one-dimensional gratings can be combined to achieve two-dimensional pupil expansion of light within the one-dimensional grating region. The combination of two one-dimensional gratings can improve optical efficiency and simplify the design of the grating structure on the light guide device, thereby reducing production costs.

In some examples of this application, the light guide device is a diffraction optical waveguide lens. The first grating region 1, the second grating region 2, and the third grating region 3 are located on one surface of the substrate 4 along its own thickness direction, as shown in FIG. 1 and FIG. 3; or, the first grating region 1, the second grating region 2, and the third grating region 3 are respectively disposed on two opposing surfaces of the substrate 4 along its own thickness direction.

According to this example, two different arrangements of the first grating region 1, the second grating region 2, and the third grating region 3 on the substrate 4, when the light guide device is used as a diffractive optical waveguide lens, are described.

In the first arrangement, the first grating region 1, the second grating region 2, and the third grating region 3 are all located on one surface of the substrate along its own thickness direction. This arrangement means that all the grating regions are located on one surface, which simplifies the manufacturing process because the grating only needs to be etched or processed on one surface. In addition, this arrangement may make the propagation path of light more compact, which helps to reduce the overall size of the light guide device.

In the second arrangement, the first grating region 1, the second grating region 2, and the third grating region 3 are respectively disposed on two opposing surfaces of the substrate 4 along its own thickness direction. This arrangement helps reduce the mutual interference between the grating regions, since they are distributed on opposing sides of the substrate. This design may make the propagation of light more stable, reducing light loss or distortion caused by interference between grating regions.

Both of the above arrangements have their own advantages and disadvantages. The first arrangement simplifies the manufacturing process and may reduce the size of the device. The second arrangement improves the stability of the propagation of light. As for which arrangement to choose, it depends on the specific application requirements and manufacturing conditions. The first arrangement can be chosen when aiming to simplify manufacturing and reduce size. When higher requirements are placed on the stability of light propagation, the second arrangement can be chosen.

Optionally, the grating types of the first grating region 1, the second grating region 2, and the third grating region 3 include volume holographic gratings, surface relief gratings, or photonic crystals.

By using volume holographic gratings, surface relief gratings, or photonic crystals as the grating type in light guide devices, precise control of light and efficient pupil expansion effects can be achieved. Each of these grating types has its own unique advantages and applicable scope. The appropriate grating type can be chosen according to specific application requirements to optimize the performance of the light guide device.

The light guide device provided according to the embodiments of this application can be, for example, a diffractive optical waveguide lens, which is suitable for use in a display apparatus, such as a head-mounted display (HMD). Furthermore, the display apparatus can be an AR head-mounted display.

Of course, the light guide device may also take the form of other types of diffractive optical elements.

According to another embodiment of the present application, an optical module is provided. The optical module includes a light guide device as described above and a light engine; wherein the light engine is configured for projecting light onto the light guide device, such that light projected by the light engine can cover the first grating region 1.

Here, the imaging light emitted by the light engine can be monochromatic light or polychromatic light.

By projecting light directly onto the first grating region 1 of the light guide device through a light engine, efficient utilization of light is ensured. Since the first grating region 1 is the entry point for light to enter the light guide device, it is crucial to ensure that light covers this region.

Because of the well-designed three grating regions of the light guide device, the light projected by the light engine is precisely controlled and undergo pupil expansion when passing through these grating regions. This helps optimize the overall performance of the optical module, improving image brightness and clarity.

The optical module provided in the embodiment of this application can be applied in, for example, display apparatuses, specifically in AR glasses or AR helmets.

According to yet another embodiment of the present application, a display apparatus is provided. The display apparatus includes: a housing and the optical module as described above, the optical module being disposed within the housing.

The specific embodiments of the optical module and the display apparatus in the embodiments of the application may be implemented with reference to the respective embodiments of the above light guide device, and therefore at least possess all the beneficial effects brought about by the technical solutions of the above embodiments, which will not be repeated herein.

The above embodiments mainly describe the differences between the various embodiments. As long as the different optimization features between the various embodiments are not contradictory, they can be combined to form a better embodiment. For the sake of brevity, they will not be elaborated here.

Although some specific embodiments of this application have been described in detail by way of examples, those skilled in the art should understand that the above examples are for illustrative purposes only and are not intended to limit the scope of this application. Those skilled in the art should understand that modifications can be made to the above embodiments without departing from the scope and spirit of this application. The scope of the application is defined by the appended claims.

## Claims

1. A light guide device, **characterized by** comprising a substrate (4) and a first grating region (1), a second grating region (2) and a third grating region (3) disposed on the substrate (4);
the first grating region (1) is configured to couple light into the substrate (4) and generate a first diffracted light (01) that propagates toward the second grating region (2);
the second grating region (2) receives the first diffracted light (01) and is able to generate a second diffracted light (02) that propagates toward the third grating region (3), the third grating region (3) receives the second diffracted light (02) and is able to generate a third diffracted light (03) that diffracts toward the second grating region (2), the second diffracted light (02) and the third diffracted light (03) undergo pupil expansion by the second grating region (2) along two different dimensions and are coupled out.

2. The light guide device according to claim 1, wherein a set angle θ2 is formed between the grating vector K1 direction of the first grating region (1) and the grating vector K3 direction of the third grating region (3), and 30°≤θ2≤150°.

3. The light guide device according to claim 1, wherein the first grating region (1), the second grating region (2), and the third grating region (3) form a closed grating vector polygon, so that the exit angle of the light rays after being coupled out through the second grating region (2) is consistent with the initial incident angle.

4. The light guide device according to claim 1, wherein a one-dimensional grating is provided in the second grating region (2).

5. The light guide device according to claim 4, wherein a one-dimensional grating or a two-dimensional grating is provided in the first grating region (1).

6. The light guide device according to claim 4, wherein a one-dimensional grating is provided in the third grating region (3).

7. The light guide device according to any one of claims 1 to 6, wherein the light guide device is a diffraction optical waveguide lens;
the first grating region (1), the second grating region (2), and the third grating region (3) are located on one surface of the substrate (4) along its own thickness direction; or,
the first grating region (1), the second grating region (2), and the third grating region (3) are respectively disposed on two opposing surfaces of the substrate (4) along its own thickness direction.

8. The light guide device according to claim 7, wherein the grating types of the first grating region (1), the second grating region (2), and the third grating region (3) include volume holographic gratings, surface relief gratings, or photonic crystals.

9. An optical module, **characterized by** comprising:
the light guide device according to any one of claims 1 to 8; and
a light engine configured for projecting light onto the light guide device such that light projected by the light engine can cover the first grating region (1).

10. A display apparatus, **characterized by** comprising:
a housing; and
the optical module according to claim 9, wherein the optical module is disposed in the housing.
